# FASCICULE DE BREVET EUROPEEN

(11) **EP 3 243 013 B1**
(45) Date de publication et mention de la délivrance du brevet: **23.12.2020**
(21) Numéro de dépôt: 16702169.0
(22) Date de dépôt: 05.01.2016
(51) Int. Cl.: F16G 15/02

(54) **MAILLON DÉMONTABLE, ADAPTÉ NOTAMMENT À RACCORDER DEUX CHAINES POUR L'ANCRAGE AU SOL D'UNE INSTALLATION FLOTTANTE**
ABMONTIERBARE VERBINDUNG, INSBESONDERE ZUR VERBINDUNG VON ZWEI KETTEN ZUR VERANKERUNG EINER SCHWIMMENDEN AUSRÜSTUNG IM BODEN
DISMANTLABLE LINK, SUITABLE IN PARTICULAR FOR INTERCONNECTING TWO CHAINS FOR ANCHORING FLOATING EQUIPMENT TO THE GROUND

(30) Priorité: 08.01.2015 FR 1550133
(43) Date de publication de la demande: 15.11.2017
(73) Titulaire: NOV - BLM, 44470 Carquefou (FR)
(72) Inventeur: BUSSON, Philippe, 44800 Saint-Herblain (FR)
(74) Mandataire: Jacobacci Coralis Harle
(86) Numéro de dépôt international: PCT/FR2016/050007
(87) Numéro de publication internationale: WO 2016/110638

(56) Documents cités:
- GB-A- 620 330
- JP-A- H08 170 627
- US-A- 2 347 088
- US-A- 2 731 791

## Description

### DOMAINE TECHNIQUE AUQUEL SE RAPPORTE L'INVENTION

La présente invention concerne le domaine des maillons démontables, adaptés notamment à raccorder deux chaînes pour l'ancrage au sol d'une installation flottante.

### ARRIERE-PLAN TECHNOLOGIQUE

Certains domaines industriels utilisent des chaînes pour attacher deux éléments en eux, notamment en vue d'un ancrage, d'une traction, etc.

Par exemple, certaines installations flottantes, notamment les plateformes pour l'exploitation en mer des puits de pétrole, sont ancrées au sol au moyen de chaînes d'ancrage (encore appelées « lignes d'ancrage »), de grande dimension.

L'extrémité inférieure, aval, de chacune de ces chaînes d'ancrage comporte des moyens pour sa fixation au sol, notamment par l'intermédiaire d'un massif enfoncé dans le fond marin. Leur extrémité supérieure, amont, s'étend au niveau d'un poste de manœuvre qui est ménagé sur le côté de l'installation flottante, au-dessus de sa ligne de flottaison.

Chaque poste de manœuvre comprend généralement - un treuil tensionneur, couramment désigné « barbotin », pour régler la tension de la chaîne d'ancrage, et - des moyens stoppeurs activables/désactivables, pour verrouiller la tension appliquée à cette chaîne d'ancrage.

En pratique, il est parfois nécessaire de solidariser une telle chaîne d'ancrage avec une autre chaîne de l'installation flottante.

Par exemple, pour assurer un tensionnement d'une chaîne d'ancrage, le treuil tensionneur comporte avantageusement un brin de chaîne maitre dont l'extrémité aval comporte un maillon aval apte à être solidarisé de manière amovible, par le biais d'un maillon démontable, avec un maillon de la chaine d'ancrage.

En raison des dimensions et du poids des maillons, cette opération d'assemblage est réalisée par un ou deux opérateurs, et ces opérateurs sont souvent amenés à utiliser un treuil électrique pour assister le soulèvement des maillons et faciliter les manœuvres de solidarisation/désolidarisation.

Mais, les maillons démontables actuels, par example connus de JP H08 170627 A, ne sont pas totalement satisfaisants, notamment sur le plan de la facilité d'assemblage et de la résistance. De plus, ces maillons démontables n'ont pas la même géométrie que les maillons constitutifs d'une chaine d'ancrage.

On utilise en effet bien souvent des maillons dits « C-link », qui sont lourds et complexes à manipuler en montage/démontage.

Il existe par conséquent un besoin de nouvelles structures pour des maillons démontables dont l'ergonomie en montage/démontage et la résistance seraient optimisées.

### OBJET DE L'INVENTION

La présente invention concerne ainsi un maillon démontable, apte notamment à raccorder deux chaînes pour l'ancrage au sol d'une installation flottante.

Ce maillon démontable, en forme d'anneau oblong, comporte deux tronçons rectilignes reliés par deux tronçons coudés.

Et conformément à l'invention, ce maillon démontable comprend :
- deux pièces latérales qui forment chacune l'un desdits tronçons coudés, et
- deux pièces de liaison, qui forment chacune au moins une partie de l'un desdits tronçons rectilignes,
et lesdites pièces latérales sont assemblées avec lesdites pièces de liaison, par le biais de moyens de solidarisation amovible.

Un tel maillon a ainsi l'intérêt de pouvoir présenter une géométrie standard identique à un maillon sans étai (studless), et de pouvoir comporter une grande résistance en particulier supérieure à au moins 1,5 fois (de préférence de l'ordre de 1,7 fois) la capacité nominale de traction du treuil de traction.

Selon une forme de réalisation préférée, les deux pièces latérales sont chacune en forme de U et sont chacune terminées par deux portions d'extrémité qui s'étendent parallèlement l'une par rapport à l'autre et qui sont destinées chacune à s'étendre au niveau de l'un desdits tronçons rectilignes ; les deux pièces de liaison sont chacune rectiligne et sont chacune terminées par deux portions d'extrémité qui s'étendent coaxialement l'une par rapport à l'autre et qui sont destinées à s'étendre au niveau du tronçon rectiligne correspondant ; et chacune desdites portions d'extrémité d'une pièce de liaison coopère avec l'une desdites portions d'extrémité d'une pièce latérale, pour former un couple d'assemblage dans lequel lesdites portions d'extrémité sont assemblées par le biais des moyens de solidarisation amovible.

Dans ce cas, au niveau de chaque couple d'assemblage, les moyens de solidarisation amovible comprennent avantageusement :
- des moyens pour l'emboîtement en translation des portions d'extrémité, selon un axe de translation parallèle à un axe longitudinal du tronçon rectiligne correspondant,
- des moyens pour le blocage en translation desdites portions d'extrémité emboîtées, qui sont manœuvrables entre une position active et une position inactive, et
- des moyens pour le verrouillage en position active desdits moyens de blocage.

De préférence, les portions d'extrémité d'un couple d'assemblage comportent des surfaces complémentaires, l'une mâle et l'autre femelle, qui forment les moyens d'emboîtement en translation ; lesquelles surfaces complémentaires sont adaptées à autoriser une rotation de la pièce de liaison par rapport à la pièce latérale associée, selon un axe de rotation s'étendant coaxialement à l'axe longitudinal du tronçon rectiligne correspondant ; les moyens de blocage sont manœuvrables entre les positions active et inactive par le biais de ladite manœuvre en rotation, et les moyens de verrouillage consistent en des moyens de verrouillage en rotation dans ladite position active.

Dans ce cas, les surfaces complémentaires ont avantageusement une section transversale circulaire et s'étendent coaxialement l'une par rapport à l'autre.

Encore dans ce cas, les moyens de blocage en translation comprennent avantageusement des couples ergot/gorge qui sont ménagés sur lesdites surfaces complémentaires et qui sont orientés pour assurer le blocage en translation.

Ces surfaces complémentaires ont de préférence des formes tronconiques complémentaires ; et les couples ergot/gorge sont réparties sur au moins une bande longitudinale de chacun desdites surfaces complémentaires, ladite au moins une bande étant orientée de sorte que son axe longitudinal s'étend parallèlement à l'axe longitudinal desdites surfaces complémentaires.

Les surfaces complémentaires comportent de préférence chacune deux bandes longitudinales de couples ergot/gorge, lesquelles bandes longitudinales sont ménagées de manière diamétralement opposées par rapport à l'axe longitudinal desdites surfaces complémentaires.

De manière générale, les moyens de verrouillage comprennent au moins un organe d'indexation amovible qui est rapporté entre au moins deux logements coaxiaux :
- un premier logement ménagé dans une pièce de liaison, et
- un second logement ménagé dans l'une au moins des pièces latérales.

Dans ce cas, les portions d'extrémité des pièces latérales comprennent avantageusement chacune une surface mâle munie d'une face terminale comportant une partie de logement ; ces faces terminales desdites pièces latérales sont destinées à venir attenantes l'une de l'autre lors de l'assemblage du maillon, et leurs parties de logements juxtaposées forment ensemble ledit second logement destiné à recevoir l'organe d'indexation.

De préférence, en position active, les logements définissent chacun un axe longitudinal s'étendant perpendiculairement, ou au moins approximativement perpendiculairement, par rapport au plan passant par les bandes longitudinales de couples ergot/gorge.

Encore de préférence, les deux pièces latérales sont identiques l'une par rapport à l'autre et les deux pièces de liaison sont identiques l'une par rapport à l'autre.

### DESCRIPTION DETAILLEE DE L'INVENTION

L'invention sera encore illustrée, sans être aucunement limitée, par la description suivante d'une forme de réalisation particulière d'un maillon démontable, en relation avec les figures annexées dans lesquelles :
- la figure 1 est une vue générale et en perspective du maillon démontable selon l'invention, une fois ses parties constitutives assemblées ;
- la figure 2 est une vue générale et en perspective du maillon démontable selon la figure 1, représenté de manière éclatée ;
- les figures 3 à 7 représentent les principales étapes pour l'assemblage des pièces constitutives du maillon démontable selon la figure 1 ;
- la figure 8 est une vue de côté du maillon démontable selon la figure 1, dont les moyens de blocage en translation sont en position inactive ;
- la figure 9 est une vue en coupe du maillon démontable de la figure 8, selon un plan de coupe médian IX-IX ;
- la figure 10 est une vue de détails et agrandie du maillon de la figure 9, montrant ses moyens de blocage en translation en position inactive ;
- la figure 11 est encore une vue en coupe du maillon démontable, selon un plan de coupe transversal XI-XI de la figure 9 passant par un couple d'assemblage ;
- la figure 12 est une vue de détails et agrandie des moyens de blocage en translation en configuration inactive ;
- la figure 13 est une vue de côté du maillon démontable selon l'invention, dans laquelle les moyens de blocage en translation sont en position active ;
- la figure 14 est une vue en coupe du maillon démontable de la figure 13, selon un plan de coupe médian XIV-XIV ;
- la figure 15 est une vue de détails et agrandie de la vue en coupe de la figure 14, au niveau des moyens de blocage en translation ;
- la figure 16 est une vue en coupe du maillon démontable de la figure 14, selon un plan de coupe transversal XVI-XVI passant par un couple d'assemblage ;
- la figure 17 est une vue partielle et agrandie de la figure 16, montant les moyens de blocage en translation dans leur position active.

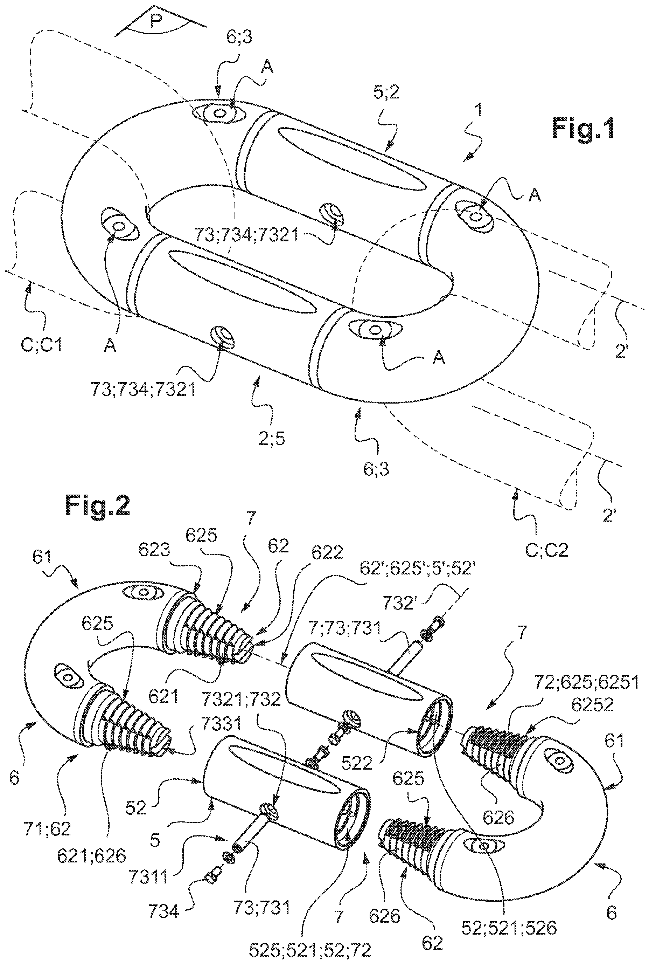

Le maillon démontable 1 (ou « maille démontable »), illustré schématiquement sur la figure 1, est adapté notamment à raccorder deux chaînes C, par exemple deux chaînes pour l'ancrage au sol d'une installation flottante (non représentée).

Une telle installation flottante consiste avantageusement en une installation flottante offshore, par exemple une plateforme flottante et notamment une plateforme pétrolière.

Les chaînes C sont constituées d'un ensemble de maillons métalliques, entrelacés deux à deux.

Au sein de chaque chaîne d'ancrage, les plans médians de deux maillons directement associés sont destinés à s'étendre perpendiculairement, ou au moins approximativement perpendiculairement, l'un par rapport à l'autre.

Chaque maillon consiste classiquement en un maillon sans étai (« studless link ») ou en un maillon à étai (« stud link »).

Le maillon démontable 1 selon l'invention est destiné à raccorder deux maillons d'extrémité (figure 1) :
- un maillon d'extrémité amont C1, destiné à constituer l'extrémité de la chaîne située du côté de l'installation flottante, et
- un maillon d'extrémité aval C2, destiné à constituer l'extrémité de la chaîne fixée au fond marin.

Le maillon démontable 1, de type maillon sans étai ou « studless link », a une forme d'anneau oblong dont le fil s'étend dans un plan médian P (figure 1).

Un tel maillon démontable 1 comporte deux tronçons rectilignes 2, définissant chacun un axe longitudinal 2', reliés par deux tronçons coudés 3 (figure 1).

Ce maillon démontable 1 a une forme générale standard, identique à un maillon d'une chaîne d'ancrage ; il a par exemple les dimensions suivantes : un diamètre de « fil » de 150 mm, une longueur de 900 mm et une largeur de 500 mm.

Selon l'invention et tel que représenté sur la figure 2, ce maillon démontable 1 comprend un ensemble de quatre pièces (en d'autres termes, le corps de ce maillon démontable 1 est constitué de quatre pièces) :
- deux pièces de liaison 5, identiques l'une par rapport à l'autre, qui forment chacune au moins une partie de l'un des tronçons rectilignes 2, et
- deux pièces latérales 6, identiques l'une par rapport à l'autre, qui forment chacune l'un des tronçons coudés 3.

Ces pièces 5, 6 sont ici chacune réalisées monobloc (usinées dans la masse).

En l'espèce, les pièces latérales 6 ont chacune la forme d'un U comprenant :
- une partie courbe 61, correspondant à l'un des tronçons coudés 3 du maillon démontable 1, et
- deux portions d'extrémités 62 qui sont destinées chacune à s'étendre au niveau de l'extrémité de l'un des tronçons rectilignes 2 du maillon démontable 1 assemblé.

La partie courbe 61 comporte des trous taraudés A (figure 1), permettant de visser un anneau de manutention pour faciliter le montage.

Les deux portions d'extrémités 62 définissent chacune un axe longitudinal 62', s'étendant parallèlement l'un par rapport à l'autre.

De leur côté, les deux pièces de liaison 5 ont chacune une forme générale cylindrique rectiligne, définissant un axe longitudinal 5', pour former l'un des tronçons rectilignes 2 du maillon démontable 1 formé.

Chaque pièce de liaison 5 est terminée par deux portions d'extrémité 52 qui sont opposées l'une par rapport à l'autre et qui sont destinées à s'étendre au niveau des extrémités du tronçon rectiligne 2 correspondant.

Ces portions d'extrémité 52 définissent chacune un axe longitudinal 52', s'étendant coaxialement l'un par rapport à l'autre.

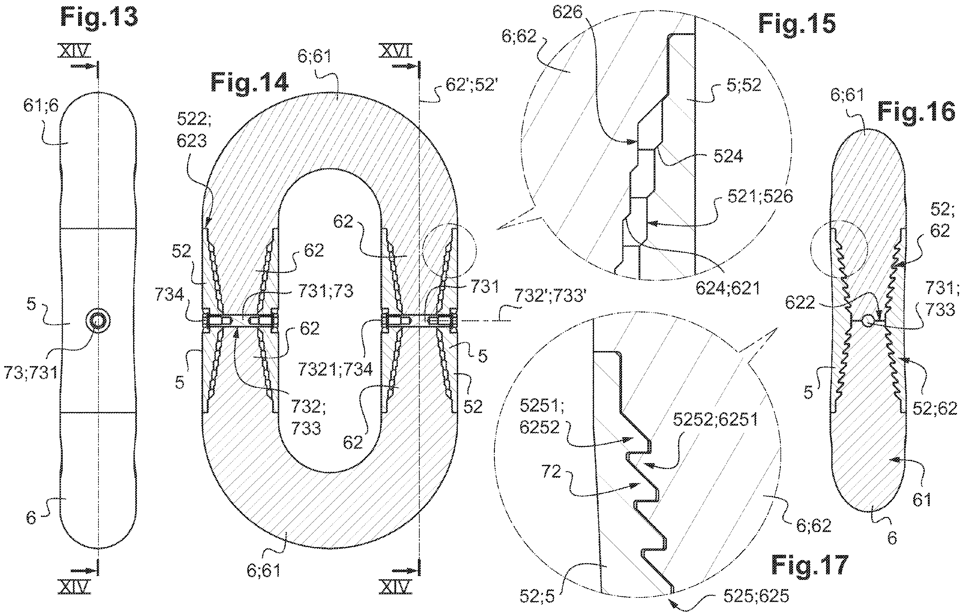

Pour l'assemblage du maillon démontable 1, chacune des portions d'extrémités 52 d'une pièce de liaison 5 coopère avec l'une des portions d'extrémités 62 d'une pièce latérale 6, pour former un couple d'assemblage 52, 62 (visible notamment sur les figures 14 à 17).

En l'espèce, le maillon démontable 1 comporte quatre couples d'assemblage 52, 62 qui sont situés chacun à la jonction entre un tronçon rectiligne 2 et un tronçon coudé 3.

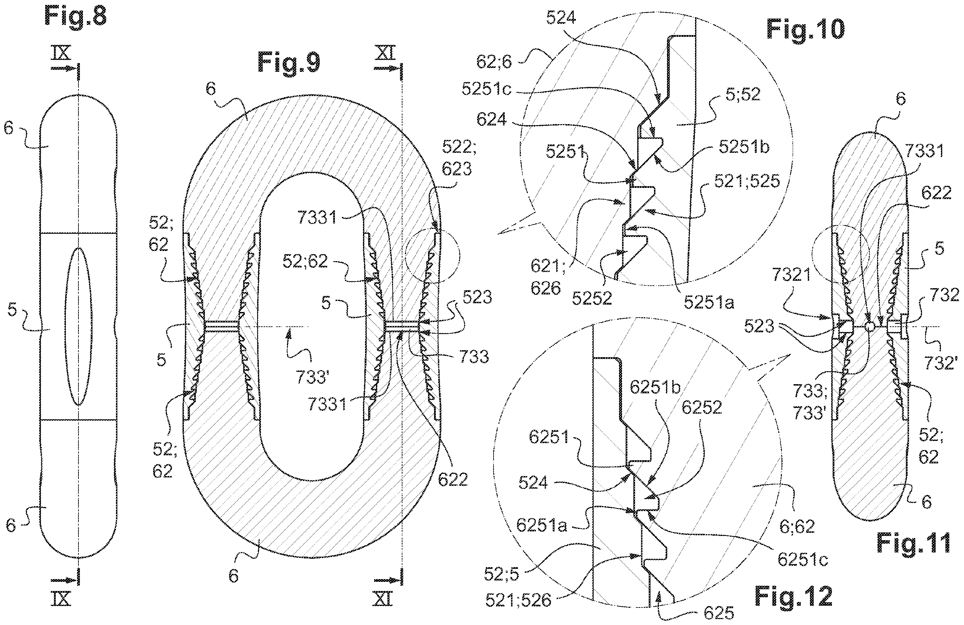

Dans chaque couple d'assemblage 52, 62, les portions d'extrémités 52, 62 en présence sont assemblées par le biais de moyens de solidarisation amovible 7 qui comprennent :
- des moyens 71 pour l'emboîtement en translation des portions d'extrémité 52, 62, selon un axe de translation coaxial à un axe longitudinal 2' du tronçon rectiligne 2 correspondant et coaxial à un axe longitudinal 5' de la pièce de liaison 5,
- des moyens 72 pour le blocage en translation desdites portions d'extrémité 52, 62 emboîtées (figure 17), qui sont manœuvrables entre une position active (figures 13 à 17) et une position inactive (figures 8 à 12), et
- des moyens 73 pour le verrouillage en position active desdits moyens de blocage en translation 72 (figures 13 à 17).

Tout d'abord, les portions d'extrémité 52, 62 d'un couple d'assemblage 52, 62 comportent des surfaces complémentaires 521, 621, l'une mâle et l'autre femelle, pour former les moyens d'emboîtement en translation 71.

Ces surfaces complémentaires 521, 621 ont chacune une section transversale circulaire et s'étendent coaxialement l'une par rapport à l'autre, pour autoriser une rotation de la pièce de liaison 5 par rapport à la pièce latérale 6 associée selon un axe de rotation s'étendant, d'une part, coaxialement à l'axe longitudinal 2' du tronçon rectiligne 2 correspondant et, d'autre part, coaxialement à l'axe longitudinal 5' de ladite pièce de liaison 5.

En l'espèce, les portions d'extrémité 62 de la pièce latérale 6 comportent chacune une surface mâle 621 de forme générale tronconique, coaxiale à son axe longitudinal 62'.

Chaque surface mâle 621 est terminée par deux extrémités :
- une face d'extrémité libre 622, de petit diamètre et perpendiculaire à son axe longitudinal 62', et
- une extrémité 623, de grand diamètre et formant une couronne, raccordée à la portion courbe 61.

De leur côté, les portions d'extrémité 52 de chaque pièce liaison 5 comportent chacune une surface femelle 521 de forme générale tronconique qui s'étend coaxialement à son axe longitudinal 52'.

Chaque surface femelle 521 est terminée par deux extrémités :
- une extrémité extérieure 522, de grand diamètre et formant une couronne délimitant l'entrée de ladite surface femelle, et
- une extrémité intérieure 523, de petit diamètre et débouchant ici en direction de l'extrémité intérieure 523 de l'autre surface femelle 521 (notamment visible sur les figures 9 et 11).

Chaque surface femelle 521 forme ainsi un logement qui s'ouvre au niveau de l'une des extrémités longitudinales de la pièce de liaison 5.

Chaque surface femelle 521 s'étend ici, au moins approximativement, sur la moitié de la longueur de la pièce de liaison 5 (notamment visible sur les figures 9 et 11).

Les surfaces complémentaires 521, 621 ont chacune une forme de type étagée, avec une succession d'épaulements concentriques 524, 624 répartis sur leurs longueurs respectives (visibles notamment sur les figures 10 et 12).

Tel que développé ci-après, cette forme de réalisation a pour intérêt d'assurer un guidage optimal en rotation de la pièce de liaison 5, ici par une coopération avec les moyens de blocage en translation 72.

Les moyens de blocage en translation 72 comprennent des couples ergot/gorge qui sont, d'une part, ménagés sur les surfaces 521, 621 complémentaires et, d'autre part, orientés pour assurer le blocage en translation des portions d'extrémités 52, 62 de chaque couple d'assemblage 52, 62.

En l'espèce, ces moyens de blocage en translation 72 sont manœuvrables entre deux positions :
- une position active, dans laquelle les portions d'extrémités 52, 62 assemblées d'un couple d'assemblage 52, 62 sont bloquées en translation, et
- une position inactive, dans laquelle les portions d'extrémités 52, 62 assemblées dudit couple d'assemblage 52, 62 sont libres en translation.

La transition entre ces deux positions est obtenue par une manœuvre en rotation de la pièce de liaison 5 par rapport à la pièce latérale 6 associée (le cas échéant par rapport aux deux pièces latérales 6 associées), selon l'axe de rotation s'étendant coaxialement à l'axe longitudinal 2' du tronçon rectiligne 2 correspondant et coaxialement à l'axe longitudinal 5' de cette pièce de liaison 5.

Pour cela, les surfaces complémentaires 521, 621 sont chacune munies d'au moins une bande longitudinale 525, 625 comprenant un ensemble d'ergots 5251, 6251 qui délimitent entre eux des gorges 5252, 6252 s'ouvrant latéralement.

En l'occurrence, ces surfaces complémentaires 521, 621 comportent chacune deux bandes longitudinales 525, 625, ménagées de manière diamétralement opposées par rapport à son axe longitudinal 52', 62' (figure 2).

Chaque bande longitudinale 525, 625 s'étend sur un secteur angulaire correspondant ici au quart de la circonférence de la surface complémentaire 521, 621 correspondante.

Ces bandes longitudinales 525, 625 sont ainsi séparées par deux bandes libres 526, 626 dépourvues d'ergots, ménagées de manière diamétralement opposées par rapport à son axe longitudinal 52', 62'.

Chaque bande longitudinale 525, 625 est orientée de sorte que son axe longitudinal 525', 625' s'étende parallèlement à l'axe longitudinal 52', 62' de la surface complémentaire 521, 621 correspondante.

Chaque bande longitudinale 525, 625 a la forme générale d'un crénelage à denture droite dont les ergots 5251, 6251 consistent chacun en une dent dont l'arête libre 5251a, 6251a s'étend dans un plan perpendiculaire à l'axe longitudinal 52', 62' de la surface complémentaire 521, 621 correspondante (figures 10 et 12).

Chaque ergot 5251, 6251 comporte encore deux faces opposées :
- une face avant 5251b, 6251b qui est inclinée par rapport à l'axe longitudinal 52', 62' de la surface complémentaire 521, 621 correspondante, et
- une face arrière 5251c, 6251c qui s'étend perpendiculairement à l'axe longitudinal 52', 62' de la surface complémentaire 521, 621 correspondante.

La face avant 5251b, 6251b de chaque ergot 5251, 6251 d'une surface complémentaire 521, 621 s'étend dans le prolongement d'un épaulement 524, 624 précité, de sorte à assurer un guidage optimal en rotation par une coopération avec la face avant 5251b, 6251b d'un ergot 5251, 6251 de l'autre surface complémentaire 521, 621.

Les moyens de verrouillage 73 comprennent quant à eux un organe d'indexation amovible 731, en l'occurrence une clavette cylindrique, qui est destiné à être rapporté entre la pièce de liaison 5 et les pièces latérales 6 associées.

Cet organe d'indexation 731 est destiné à être rapporté entre deux logements 732, 733 s'étendant coaxialement lors du positionnement de la pièce de liaison 5 en position active, à savoir :
- un premier logement 732, ménagé dans la pièce de liaison 5 et
- un second logement 733, ménagé dans l'une au moins des pièces latérales 6.

Le premier logement 732 de la pièce de liaison 5 consiste en un logement traversant qui présente une section cylindrique.

Ce premier logement 732 définit un axe longitudinal 732' qui s'étend, d'une part, perpendiculairement à l'axe longitudinal 5' de la pièce de liaison 5 et, d'autre part, perpendiculairement au plan général passant par ses bandes longitudinales 525.

Ce premier logement 732 est localisé ici entre les extrémités intérieures 523 des deux surfaces femelles 521, en communication avec ces dernières (figure 11 notamment).

Ce premier logement 732 débouche, en plus, de part et d'autre de la pièce de liaison 5 pour la mise en place de l'organe d'indexation 731 précité.

Le second logement 733 est quant à lui formé par les faces d'extrémités libres 622 des pièces latérales 6 qui sont destinées à venir attenantes l'une de l'autre lors de l'assemblage du maillon démontable 1.

Pour cela, ces faces d'extrémités libres 622 comportent chacune une partie 7331 de second logement 733, en l'occurrence de forme demi-cylindrique (figure 2).

Cette partie 7331 de second logement 733 est destinée à former le second logement 733, une fois juxtaposée avec la partie 7331 complémentaire de l'autre face d'extrémité libre 622 (figure 11 notamment).

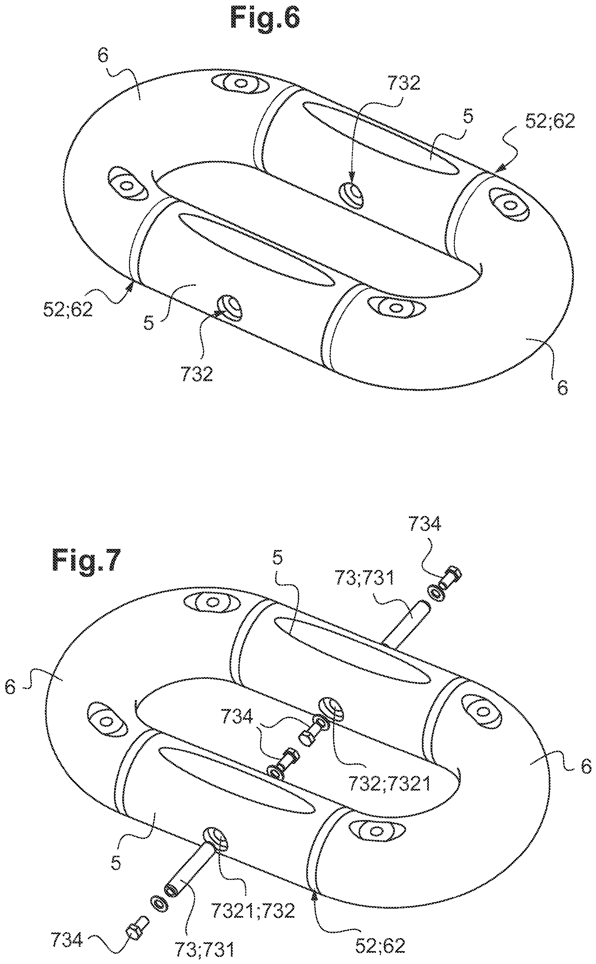

Le second logement 733 obtenu, cylindrique, définit un axe longitudinal 733' s'étendant perpendiculairement par rapport à l'axe longitudinal 62' des portions d'extrémité 62 des pièces latérales 6 et par rapport au plan général passant par les bandes longitudinales 625 de ces mêmes portions d'extrémité 62 (figures 6 et 11).

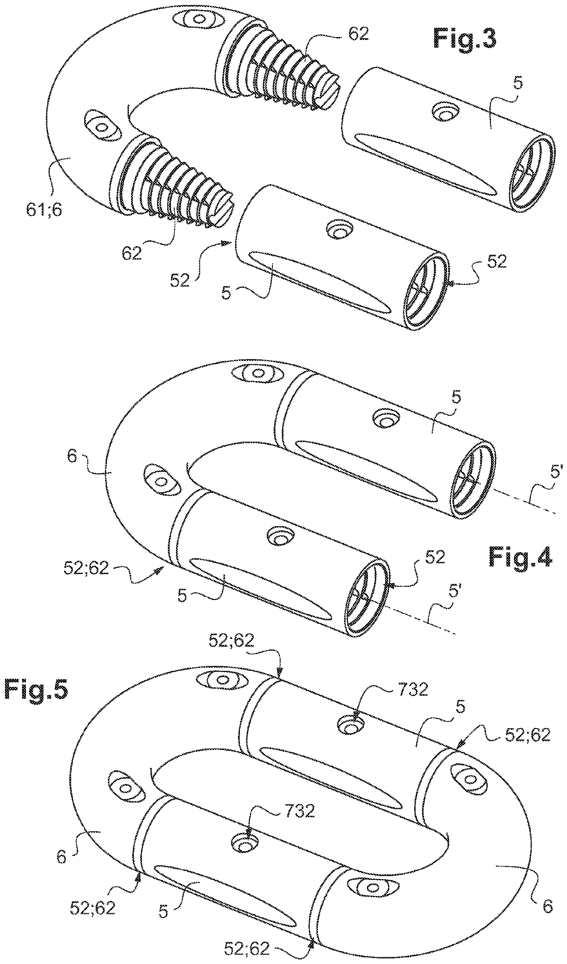

En pratique, un opérateur rapporte les deux pièces de liaison 5 sur l'une des pièces latérales 6, de sorte que les portions d'extrémités 62 de cette pièce latérale 6 coopèrent chacune avec l'une des deux portions d'extrémité 52 de l'une des pièces de liaison 5 (figures 3 et 4).

Cet assemblage est obtenu par un emboitement en translation des portions d'extrémité 52, 62 complémentaires, selon un axe de translation parallèle à l'axe longitudinal 5' de la pièce de liaison 5 correspondante (et parallèle à l'axe longitudinal 52', 62' des surfaces complémentaires 521, 621 correspondantes).

Les portions d'extrémité 52, 62 associées constituent un couple d'assemblage 52, 62 comportant les surfaces complémentaires 521, 621, l'une mâle et l'autre femelle, formant les moyens d'emboîtement en translation 71 précités.

La forme tronconique de ces surfaces complémentaires 521, 621 participe à un guidage optimal lors de cet emboîtement en translation.

Pour effectuer cet emboîtement, chaque pièce de liaison 5 est en plus orientée angulairement de sorte que les bandes longitudinales 525 de sa portion d'extrémité 52 à associer sont décalées angulairement par rapport aux bandes longitudinales 625 de la portion d'extrémité 62 de la pièce latérale 6.

En d'autres termes, les bandes longitudinales 525 de la surface femelle 521 s'étendent chacune dans l'alignement de l'une des zones longitudinales 626 de la surface mâle 621, et réciproquement (figures 9 à 12).

La seconde portion d'extrémité 52 de chacune des pièces de liaison 5 reste libre.

On obtient ainsi un ensemble formé d'une pièce latérale 6 associée à deux pièces de liaison 5, chacune par le biais d'un couple d'assemblage 52, 62 (figure 4).

Avant sa fermeture, le maillon démontable 1 est associé à un maillon amont C1 et à un maillon aval C2 tel que décrit notamment en relation avec la figure 1.

La mise en place des maillons amont C1 et aval C2 est facilitée par l'ouverture importante de ce maillon démontable 1 en cours de montage.

L'opérateur rapporte ensuite la seconde pièce latérale 6 au niveau des portions d'extrémité 52 libres des pièces de liaison 5 toujours en position inactive (figure 5).

Les nouvelles portions d'extrémité 52, 62 associées constituent alors également des couples d'assemblage 52, 62 comportant les surfaces complémentaires 521, 621, l'une mâle et l'autre femelle, pour former également les moyens d'emboîtement en translation 71 (figures 8 à 12).

Les faces terminales 622 des pièces latérales 6 sont destinées à venir attenante l'une de l'autre lors de l'assemblage du maillon 1 ; et les parties de logements 7331 juxtaposées forment ensemble le second logement 733 destiné à recevoir l'organe d'indexation 731.

Les moyens de blocage en translation 72 sont ensuite mis en œuvre par le biais d'une manœuvre en rotation de chacune des pièces de liaison 5 par rapport aux pièces latérales 6 associées (figures 5 et 6).

Les deux portions d'extrémité 62 attenantes des pièces latérales 6 forment alors une sorte de tourillon guidant la rotation de la pièce de liaison 5.

Lors de cette rotation, au sein de chaque couple d'assemblage 52, 62, l'une des bandes longitudinales 525 d'une pièce de liaison 5 coopère avec une bande longitudinale 625 complémentaire d'une pièce latérale 6 (figures 16 et 17).

En l'espèce, les ergots 5251, 6251 d'une bande longitudinale 525, 625 viennent se loger dans les gorges 5252, 6252 complémentaires de la bande longitudinale 525, 625 complémentaire (figure 17).

Dans cette position active, les logements 732, 733 définissent chacun un axe longitudinal 732', 733' s'étendant, d'une part, coaxialement l'un par rapport à l'autre et, d'autre part, perpendiculairement, ou au moins approximativement perpendiculairement, par rapport au plan passant par les bandes longitudinales 525, 625 de couples ergot/gorge 5251, 5252, 6251, 6252 (figure 14).

De manière à verrouiller ces moyens de blocage en translation 72, l'opérateur met en œuvre les moyens de verrouillage en position active 73 par l'introduction de l'organe d'indexation amovible 731 au travers des logements 732, 733 coaxiaux (figures 7 et 14).

L'organe d'indexation amovible 731 est bloqué en translation au sein des logements 732, 733 coaxiaux.

Par exemple, des vis 734 sont rapportées à chacune des extrémités 7311 de cet organe d'indexation amovible 731 (qui comporte un orifice taraudé adapté), pour coopérer avec les extrémités débouchantes 7321 du second logement 732 (qui comportent un épaulement d'appui 7321 des têtes de vis 734).

Le maillon amont C1 et le maillon aval C2 sont ainsi solidarisés par le biais du maillon démontable 1 fermé.

Inversement, pour le démontage de ce maillon 1, il suffit :
- de retirer l'organe d'indexation amovible 731 après son déblocage en translation,
- de manœuvrer en rotation les pièces de liaison 5 en position inactive, et
- d'écarter les pièces latérales 6 par rapport aux pièces de liaison 5.

De manière générale, la présente invention consiste ainsi en un maillon démontable, particulièrement ergonomique en montage/démontage tout en préservant une résistance optimale aux efforts.

Ce maillon a en plus l'intérêt de présenter une géométrie identique à celle d'un maillon standard sans étai (« studless link »).

## Revendications

1. Maillon démontable, adapté notamment à raccorder deux chaines pour l'ancrage au sol d'une installation flottante,
lequel maillon démontable (1) en forme d'anneau oblong comporte deux tronçons rectilignes (2) reliés par deux tronçons coudés (3),
lequel maillon démontable (1), du type maillon sans étai (« studless link »), comprend :
- deux pièces latérales (6) qui forment chacune l'un desdits tronçons coudés (3), et
- deux pièces de liaison (5), qui forment chacune au moins une partie de l'un desdits tronçons rectilignes (2),
lesquelles pièces latérales (6) sont assemblées avec lesdites pièces de liaison (5), par le biais de moyens de solidarisation amovible (7),
lesquelles deux pièces latérales (6) sont chacune en forme de U et sont chacune terminées par deux portions d'extrémité (62) qui s'étendent parallèlement l'une par rapport à l'autre et qui sont destinées chacune à s'étendre au niveau de l'un desdits tronçons rectilignes (2),
lesquelles deux pièces de liaison (5) sont chacune rectiligne et sont chacune terminées par deux portions d'extrémité (52) qui s'étendent coaxialement l'une par rapport à l'autre et qui sont destinées à s'étendre au niveau du tronçon rectiligne (2) correspondant,
dans lequel chacune desdites portions d'extrémité (52) d'une pièce de liaison (5) coopère avec l'une desdites portions d'extrémité (62) d'une pièce latérale (6), pour former un couple d'assemblage (52, 62) dans lequel lesdites portions d'extrémité (52, 62) sont assemblées par le biais des moyens de solidarisation amovible (7),
**caractérisé en ce que**, au niveau de chaque couple d'assemblage (52, 62), les moyens de solidarisation amovible (7) comprennent :
- des moyens (71) pour l'emboîtement en translation des portions d'extrémité (52, 62), selon un axe de translation parallèle à un axe longitudinal (2') du tronçon rectiligne (2) correspondant,
- des moyens (72) pour le blocage en translation desdites portions d'extrémité (52, 62) emboîtées, qui sont manœuvrables entre une position active et une position inactive, et
- des moyens (73) pour le verrouillage en position active desdits moyens de blocage (72),
lesquels moyens de verrouillage (73) comprennent au moins un organe d'indexation amovible (731) qui est rapporté entre au moins deux logements coaxiaux :
- un premier logement (732) ménagé dans une pièce de liaison (5), et
- un second logement (733) ménagé dans l'une au moins des pièces latérales (6),
lesquelles portions d'extrémité (62) des pièces latérales (6) comprennent chacune une surface mâle (621) munie d'une face terminale (622) comportant une partie de logement (7331),
lesquelles faces terminales (622) desdites pièces latérales (6) sont destinées à venir attenante l'une de l'autre lors de l'assemblage dudit maillon (1), et
lesquelles parties de logements (7331) juxtaposées forment ensemble ledit second logement (733) destiné à recevoir l'organe d'indexation (731).

2. Maillon démontable selon la revendication 1, **caractérisé en ce que** les portions d'extrémité (52, 62) d'un couple d'assemblage comportent des surfaces complémentaires (521, 621), l'une mâle et l'autre femelle, qui forment les moyens d'emboîtement en translation (71),
lesquelles surfaces complémentaires (521, 621) sont adaptées à autoriser une rotation de la pièce de liaison (5) par rapport à la pièce latérale (6) associée selon un axe de rotation s'étendant coaxialement à l'axe longitudinal (2') du tronçon rectiligne (2) correspondant,
**en ce que** les moyens de blocage (72) sont manœuvrables entre les positions active et inactive par le biais de ladite manœuvre en rotation,
et **en ce que** les moyens de verrouillage (73) consistent en des moyens de verrouillage en rotation (73) dans ladite position active.

3. Maillon démontable selon la revendication 2, **caractérisé en ce que** les surfaces complémentaires (521, 621) ont une section transversale circulaire et s'étendent coaxialement l'une par rapport à l'autre.

4. Maillon démontable selon l'une quelconque des revendications 2 ou 3, **caractérisé en ce que** les moyens de blocage en translation (72) comprennent des couples ergot/gorge (5251, 5252 ; 6251, 6252) qui sont ménagés sur les surfaces complémentaires (521, 621) et qui sont orientés pour assurer le blocage en translation.

5. Maillon démontable selon les revendications 3 et 4 en combinaison, **caractérisé en ce que** les surfaces complémentaires (521, 621) ont des formes tronconiques complémentaires,
et **en ce que** les couples ergot/gorge (5251, 5252 ; 6251, 6252) sont réparties sur au moins une bande longitudinale (525, 625) de chacun desdites surfaces complémentaires (521, 621), ladite au moins une bande longitudinale (525, 625) est orientée de sorte que son axe longitudinal (525', 625') s'étend parallèlement à l'axe longitudinal (52', 62') desdites surfaces complémentaires (521, 621).

6. Maillon démontable selon la revendication 5, **caractérisé en ce que** les surfaces complémentaires (521, 621) comportent chacune deux bandes longitudinales (525, 625) de couples ergot/gorge (5251, 5252 ; 6251, 6252), lesquelles bandes longitudinales (525, 625) sont ménagées de manière diamétralement opposées par rapport à l'axe longitudinal (52', 62') des surfaces complémentaires (521, 621).

7. Maillon démontable selon l'une quelconque des revendications 1 à 6, en combinaison avec la revendication 5, **caractérisé en ce que**, en position active, les logements (732, 733) définissent chacun un axe longitudinal (732', 733') s'étendant perpendiculairement, ou au moins approximativement perpendiculairement, par rapport au plan passant par les bandes longitudinales (525, 625) de couples ergot/gorge (5251, 5252 ; 6251, 6252).

8. Maillon démontable selon l'une quelconque des revendications 1 à 7, **caractérisé en ce que** les deux pièces latérales (6) sont identiques l'une par rapport à l'autre et **en ce que** les deux pièces de liaison (5) sont identiques l'une par rapport à l'autre.

## Patentansprüche

1. Abmontierbares, insbesondere zur Verbindung von zwei Ketten zur Verankerung einer schwimmenden Ausrüstung im Boden ausgelegtes Verbindungsglied,
wobei das abmontierbare Verbindungsglied (1) in Form eines länglichen Rings zwei durch zwei gebogene Abschnitte (3) verbundene gerade Abschnitte (2) aufweist,
wobei das abmontierbare Verbindungsglied (1) vom Typ eines Kettenglieds ohne Schnapper ("studless link")
- zwei seitliche Teile (6), die jeweils einen der gebogenen Abschnitte (3) bilden, und
- zwei Verbindungsteile (5), die jeweils wenigstens einen Teil eines der geraden Abschnitte (2) bilden,
aufweist,
wobei die seitlichen Teile (6) durch abnehmbare Mittel zum festen Verbinden (7) mit den Verbindungsteilen (5) zusammengefügt sind,
wobei die beiden seitlichen Teile (6) jeweils U-förmig sind und jeweils durch zwei Endabschnitte (62) abgeschlossen sind, die sich parallel zueinander erstrecken und die jeweils dazu bestimmt sind, sich im Bereich eines der geraden Abschnitte (2) zu erstrecken,
wobei die beiden Verbindungsteile (5) jeweils gerade sind und jeweils durch zwei Endabschnitte (52) abgeschlossen sind, die sich koaxial zueinander erstrecken und die dazu bestimmt sind, sich im Bereich des entsprechenden geraden Abschnitts (2) zu erstrecken,
bei dem jeder der Endabschnitte (52) eines Verbindungsteils (5) mit einem der Endabschnitte (62) eines seitlichen Teils (6) zusammenwirkt, um ein Verbindungspaar (52, 62) zu bilden, bei dem die Endabschnitte (52, 62) mittels der abnehmbaren Mittel zum festen Verbinden (7) zusammengefügt sind,
**dadurch gekennzeichnet, daß** die abnehmbaren Mittel zum festen Verbinden (7) im Bereich jedes Verbindungspaars (52, 62)
- Mittel (71) zum translatorischen Ineinanderfügen der Endabschnitte (52, 62) entlang einer zu einer Längsachse (2') des entsprechenden geraden Abschnitts (2) parallelen Translationsachse,
- Mittel (72) zum translatorischen Blockieren der ineinandergefügten Endabschnitte (52, 62), die zwischen einer aktiven Stellung und einer inaktiven Stellung bewegbar sind, und
- Mittel (73) zum Verriegeln der Blockiermittel (72) in der aktiven Stellung aufweisen,
wobei die Verriegelungsmittel (73) wenigstens ein abnehmbares Organ (731) zum Indexieren aufweisen, das zwischen wenigstens zwei koaxialen Aufnahmen eingefügt ist:
- einer in einem Verbindungsteil (5) ausgebildeten ersten Aufnahme (732) und
- einer in wenigstens einem seitlichen Teil (6) eingerichteten zweiten Aufnahme (733),
wobei die Endabschnitte (62) der seitlichen Teile (6) jeweils eine stiftartige Oberfläche (621) aufweisen, die mit einer einen Aufnahmeteil (7331) aufweisenden Endseite (622) versehen ist,
wobei die Endseiten (622) der seitlichen Teile (6) dazu bestimmt sind, beim Zusammenfügen des Verbindungsglieds (1) aneinander anzuliegen, und
wobei die nebeneinander angeordneten Aufnahmeteile (7331) gemeinsam die zweite Aufnahme (733) bilden, die dazu bestimmt ist, das Indexierorgan (731) aufzunehmen.

2. Abmontierbares Verbindungsglied gemäß Anspruch 1, **dadurch gekennzeichnet, daß** die Endabschnitte (52, 62) eines Verbindungspaars (52, 62) zueinander komplementäre Oberflächen (521, 621), die eine stiftartig und die andere muffenartig, aufweisen, die die Mittel (71) zum translatorischen Ineinanderfügen bilden,
wobei die komplementären Oberflächen (521, 621) so ausgelegt sind, daß sie ein Drehen des Verbindungsteils (5) gegenüber dem zugehörigen seitlichen Teil (6) um eine sich koaxial zur Längsachse (2') des entsprechenden geraden Abschnitts (2) erstreckende Drehachse ermöglichen,
daß die Blockiermittel (72) durch die Drehbewegung zwischen der aktiven und der inaktiven Stellung bewegbar sind
und daß die Verriegelungsmittel (73) aus Mitteln (73) zum Verriegeln durch Drehen in die aktive Stellung bestehen.

3. Abmontierbares Verbindungsglied gemäß Anspruch 2, **dadurch gekennzeichnet, daß** die komplementären Oberflächen (521, 621) einen kreisförmigen Querschnitt aufweisen und sich zueinander koaxial erstrecken,

4. Abmontierbares Verbindungsglied gemäß einem der Ansprüche 2 oder 3, **dadurch gekennzeichnet, daß** die Mittel (72) zum translatorischen Blockieren Feder/Nut-Paare (5251, 5252; 6251, 6252) aufweisen, die auf den komplementären Oberflächen (521, 621) eingerichtet sind und die so ausgerichtet sind, daß sie das translatorische Blockieren sicherstellen.

5. Abmontierbares Verbindungsglied gemäß den zusammengenommenen Ansprüchen 3 und 4, **dadurch gekennzeichnet, daß** die komplementären Oberflächen (521, 621) komplementäre kegelstumpfartige Formen aufweisen und daß die Feder/Nut-Paare (5251, 5252; 6251, 6252) auf wenigstens einem Längsband (525, 625) jeder der komplementären Oberflächen (521, 621) verteilt sind, wobei das wenigstens eine Längsband (525, 625) so ausgerichtet ist, daß sich dessen Längsachse (525', 625') parallel zur Längsachse (52', 62') der komplementären Oberflächen (521, 621) erstreckt.

6. Abmontierbares Verbindungsglied gemäß Anspruch 5, **dadurch gekennzeichnet, daß** die komplementären Oberflächen (521, 621) jeweils zwei Längsbänder von Feder/Nut-Paaren (5251, 5252; 6251, 6252) aufweisen, wobei die Längsbänder (525, 625) in Bezug auf die Längsachse (52', 62') der komplementären Oberflächen (521, 621) diametral entgegengesetzt eingerichtet sind.

7. Abmontierbares Verbindungsglied gemäß einem der Ansprüche 1 bis 6 zusammengenommen mit Anspruch 5, **dadurch gekennzeichnet, daß** die Aufnahmen (732, 733) in der aktiven Stellung jeweils eine Längsachse (732', 733') definieren, die sich senkrecht oder wenigstens näherungsweise senkrecht zur durch die Längsbänder (525, 625) von Feder/Nut-Paaren (5251, 5252; 6251, 6252) gehenden Ebene erstreckt.

8. Abmontierbares Verbindungsglied gemäß einem der Ansprüche 1 bis 7, **dadurch gekennzeichnet, daß** die beiden seitlichen Teile (6) miteinander identisch sind und daß die beiden Verbindungsteile (5) miteinander identisch sind.

## Claims

1. A demountable link, adapted in particular to connect two chains for the anchoring of a floating installation to the ground,
which demountable link (1), having the shape of an oblong ring, includes two rectilinear sections (2) connected by two bent sections (3),
wherein said demountable link (1), of the studless link type, comprises:
- two lateral parts (6) that each form one of said bent sections (3), and
- two connecting parts (5), that each form at least one portion of one of said rectilinear sections (2),
wherein said lateral parts (6) are assembled with said connecting parts (5), through removable fastening means (7),
wherein the two lateral parts (6) each have a U-shape and are each ended by two end portions (62) that extend parallel to each other and that are each intended to extend at one of said rectilinear sections (2),
wherein the two connecting parts (5) are each rectilinear and are each ended by two end portions (52) that extend coaxially relative to each other and that are intended to extend at the corresponding rectilinear section (2),
wherein each of said end portions (52) of a connecting part (5) cooperates with one of said end portions (62) of a lateral part (6), to form an assembly couple (52, 62) in which said end portions (52, 62) are assembled through removable fastening means (7),
**characterized in that**, at each assembly couple (52, 62), the removable fastening means (7) comprise:
- means (71) for the translational fitting of the end portions (52, 62) into each other, according to a translation axis parallel to a longitudinal axis (2') of the corresponding rectilinear section (2),
- means (72) for translationally blocking said fitted end portions (52, 62) relative to each other, which are operable between an active position and an inactive position, and
- means (73) for locking said blocking means (72) in the active position,
wherein the locking means (73) comprise at least one removable indexation element (731), that is added between at least two coaxial housings:
- a first housing (732) arranged in a connecting part (5), and
- a second housing (733) arranged in one at least of the lateral parts (6),
wherein the end portions (62) of the lateral parts (6) each comprise a male surface (621) provided with a terminal face (622) including a housing portion (7331),
said terminal faces (622) of said lateral parts (6) are intended to come adjacent to each other during the assembly of said link (1), and
said juxtaposed housing portions (7331) form together said second housing (733) intended to receive the indexation element (731).

2. The demountable link according to claim 1, **characterized in that** the end portions (52, 62) of an assembly couple include complementary surfaces (521, 621), a male one and a female one, which form the translational fitting means (71),
said complementary surfaces (521, 621) being adapted to allow a rotation of the connecting part (5) with respect to the associated lateral part (6) according to an axis of rotation extending coaxially to the longitudinal axis (2') of the corresponding rectilinear section (2),
**in that** the blocking means (72) are operable between the active and inactive positions through said rotational operation,
and **in that** the locking means (73) consist in means (73) for the rotational locking in said active position.

3. The demountable link according to claim 2, **characterized in that** the complementary surfaces (521, 621) have a circular cross-section and extend coaxially relative to each other.

4. The demountable link according to any one of claims 2 or 3, **characterized in that** the translational blocking means (72) comprise snug/groove couples (5251, 5252; 6251, 6252) that are arranged on the complementary surfaces (521, 621) and that are oriented so as to ensure the translational blocking.

5. The demountable link according to claims 3 and 4 in combination, **characterized in that** the complementary surfaces (521, 621) have complementary truncated-cone shapes,
and **in that** the snug/groove couples (5251, 5252 ; 6251, 6252) are distributed over at least one longitudinal band (525, 625) of each of said complementary surfaces (521, 621), said at least one longitudinal band (525, 625) being oriented in such a manner that its longitudinal axis (525', 625') extends parallel to the longitudinal axis (52', 62') of said complementary surfaces (521, 621).

6. The demountable link according to claim 5, **characterized in that** the complementary surfaces (521, 621) each include two longitudinal bands (525, 625) of snug/groove couples (5251, 5252; 6251, 6252), said longitudinal bands (525, 625) being arranged in diametrically opposed positions relative to the longitudinal axis (52', 62') of said complementary surfaces (521, 621).

7. The demountable link according to any one of claims 1 à 6, in combination with claim 5, **characterized in that**, in the active position, the housings (732, 733) each define a longitudinal axis (732', 733') extending perpendicular, or at least approximately perpendicular, to the plane passing through the longitudinal bands (525, 625) of snug/groove couples (5251, 5252; 6251, 6252).

8. The demountable link according to any one of claims 1 to 7, **characterized in that** the two lateral parts (6) are identical to each other and **in that** the two connecting parts (5) are identical to each other.
